# EUROPEAN PATENT SPECIFICATION

(11) **EP 2 112 730 B1**
(45) Date of publication and mention of the grant of the patent: **16.03.2016**
(21) Application number: 09004598.0
(22) Date of filing: 30.03.2009
(51) Int. Cl.: H02G 3/04

(54) **Hinge structure and hinge structure of terminal cap**
Scharnierstruktur und Scharnierstruktur einer Klemmenabdeckung
Structure de charnière et structure de charnière de capuchon terminal

(30) Priority: 23.04.2008 JP 2008112100
(43) Date of publication of application: 28.10.2009
(73) Proprietor: YAZAKI CORPORATION, Minato-ku, Tokyo (JP)
(72) Inventor: Fujii, Gaku, Susono-shi Shizuoka (JP); Nakatsugawa, Susumu, Sapporo-shi Hokkaido (JP)
(74) Representative: Grünecker Patent- und Rechtsanwälte PartG mbB

(56) References cited:
- EP-A1- 1 202 371
- EP-A1- 1 872 421
- WO-A1-2005/118976
- JP-A- H08 148 198
- JP-A- H08 185 908

## Description

### BACKGROUND OF THE INVENTION

### 1. Field of the invention

The present invention relates to a hinge structure and a hinge structure of a terminal cap.

### 2. Description of the related art

A hinge structure according to the preamble part of claim 1 is known from EP 1 872 421 A1. More in detail, EP 1872421 relates to a box-shaped connecting device body having an open upper end and a cover hingedly connected to one side of the open upper end of the connecting device body via a pair of hinges.

A terminal cap is conventionally known as a cap for covering a terminal (connection terminal) which is provided at a terminal end of an electric wiring and is connected to a connection terminal of an electric apparatus, and whose shape in a side view is L-shaped. The terminal cap has the functions of providing insulation so as to prevent the leakage of electric current and providing protection to prevent attachment of water or dust to the terminal and the connection terminal of the electric apparatus. The terminal cap is generally formed by injection molding an insulating synthetic resin material.

The terminal cap disclosed in JP 2004 253223 A is comprised of a cap body for accommodating a terminal which has a bent portion and whose shape in a side view is L-shaped, as well as a plurality of covers for covering an opening on the terminal-accommodating side of this cap body. The plurality of covers are of three types, i.e., a first cover to a third cover. The first cover is formed so as to be able to cover the opening at a position corresponding to an electric wire connecting portion of the terminal. The second cover is formed so as to be able to cover the opening at a position corresponding to the bent portion of the terminal. The third cover is formed so as to be able to cover the opening at a position corresponding to an electric contact portion of the terminal. The first cover to the third cover, are respectively formed continuously with the cap body by means of hinges.

If the cover is closed to cover the opening, the cover at this time moves in the rotating direction and the hinge serves as the center of rotation of the cover. Since the cover cannot be closed if another device or part is present within this range of rotational movement, it is necessary to secure a space such as in front of the opening. In recent years, however, the situation in the engine room of a vehicle such as an automobile is such that various equipment, parts, and the like are clustered together. Hence, it can be said that it is extremely difficult to secure a space for closing the cover (since the opening and closing of the cover are performed during maintenance, it is necessary to secure a space allowing the opening and closing).

### SUMMARY OF THE INVENTION

The invention has been devised in view of the above-described circumstances, and its object is to provide a hinge structure capable of opening and closing the opening even if there is no sufficient space such as in front of the opening. Another object of the invention is to provide a hinge structure of a terminal cap.

To attain the above object, in accordance with a first aspect of the invention there is provided a hinge structure comprising a bendable thin-walled plate-like hinge whose one end is continued from an outer surface of a wall constituting a first resin member and whose other end is continued from a second resin member covering an opening that is opened on an inner side of distal ends of the wall, wherein, as a construction separate from the hinge, at least one row of a rigid portion continued from the hinge and formed with a large wall thickness is provided in parallel to the wall, and the hinge is comprised of rows in a number which is larger by one than a number of the row of the rigid portion, the rows of the hinge being arranged in parallel to the wall with the rigid portion interposed between each of the rows of the hinge, the rows of the hinge being divided in at least two, a distance between the one end of the hinge continued from a proximal end side of the wall and the distal end of the wall is set in accordance with the number of rows of the rigid portion.

According to the invention having the above-described characteristic feature, when the opening of the first resin member is covered with the second resin member, a plurality of centers of rotation of the second resin member are present by virtue of the hinge structure of the invention, so that it suffices if a center of rotation is selected in accordance with the surrounding situation. In addition, it suffices if the second resin member is rotationally moved while effecting multiple-stage bending in accordance with the number of rows of the hinge. According to the invention, since the hinge structure is such that, in addition to the thin-walled plate-like hinge rows, a rigid portion which is thicker than the same is provided, a force in the twisting direction is unlikely to be applied to the hinge by virtue of the hardness of the rigid portion, with the result that the hinge structure excels in durability. In addition, according to the invention, since the hinge is divided in at least two in the hinge rows, even if one of them is broken, it is possible to maintain the function.

The hinge structure according to a second aspect of the invention is characterized in that, in the hinge structure according to the first aspect, the hinge is formed such that a width of each of the row of the hinge is shorter than a width of each of the row of the rigid portion.

In the invention having the above-described characteristic feature, if the width of the hinge is made short, a force in the twisting direction becomes further difficult to be applied to the hinge. Hence, it becomes possible to further improve the durability of the hinge structure.

A hinge structure of a terminal cap according to a third aspect of the invention is characterized in that the hinge structure according to the first or second aspect is adopted as a hinge structure between a cap body and a cover in an insulating terminal cap which is used for accommodating and protecting an electrically conductive terminal.

According to the invention having the above-described characteristic feature, it suffices if a center of rotation of the cover is selected in accordance with the surrounding situation of the terminal cap. In addition, it suffices if the cover is rotationally moved while performing multiple-stage bending.

In accordance with the invention according to the above-described first aspect of the invention, an advantage is offered in that even if there is not sufficient space such as in front of the opening, the opening and closing of the opening can be effected by moving the second resin member.

In accordance with the invention according to the above-described first aspect of the invention, an advantage is offered in that a contribution can be made to the improvement of durability of the hinge structure.

In accordance with the invention according to the above-described first aspect of the invention, an advantage is offered in that even if there is not sufficient space in the surroundings of the terminal cap, the opening of the cap body can be opened and closed by moving the cover.

### BRIEF DESCRIPTION OF THE DRAWINGS

Fig. 1 is a perspective view of a protector illustrating a first embodiment of a hinge structure in accordance with the invention;
Fig. 2A is an enlarged view of Fig. 1;
Fig. 2B is an end face view of the protector;
Fig. 3 is a plan view of the protector
Figs. 4A and 4B are diagrams illustrating another embodiment, in which Fig. 4A is a perspective view of the protector, and Fig. 4B is an end face view of the protector;
Fig. 5 is a plan view of the protector shown in Figs. 4A and 4B;
Figs. 6A to 6D are diagrams illustrating a comparative example of the hinge structure, in which Fig. 6A is a perspective view of a protector, Fig. 6B is a plan view of the protector, Fig. 6C is a side view of the protector, and Fig. 6D is an end face view of the protector;
Fig. 7 is a perspective view of a terminal cap illustrating an embodiment of a hinge structure of a terminal cap in accordance with the invention;
Fig. 8A is a plan view of the hinge structure of a terminal cap;
Fig. 8B is a cross-sectional view taken along line A-A in Fig. 8A;
Fig. 9A is an enlarged view of a portion B in Fig. 8A;
Fig. 9B is a cross-sectional view taken along line C - C in Fig. 9A;
Fig. 9C is a cross-sectional view taken along line D - D in Fig. 9A; and
Fig. 10 is a perspective view illustrating a state of use of the terminal cap.

### DESCRIPTION OF THE PREFERRED EMBODIMENTS

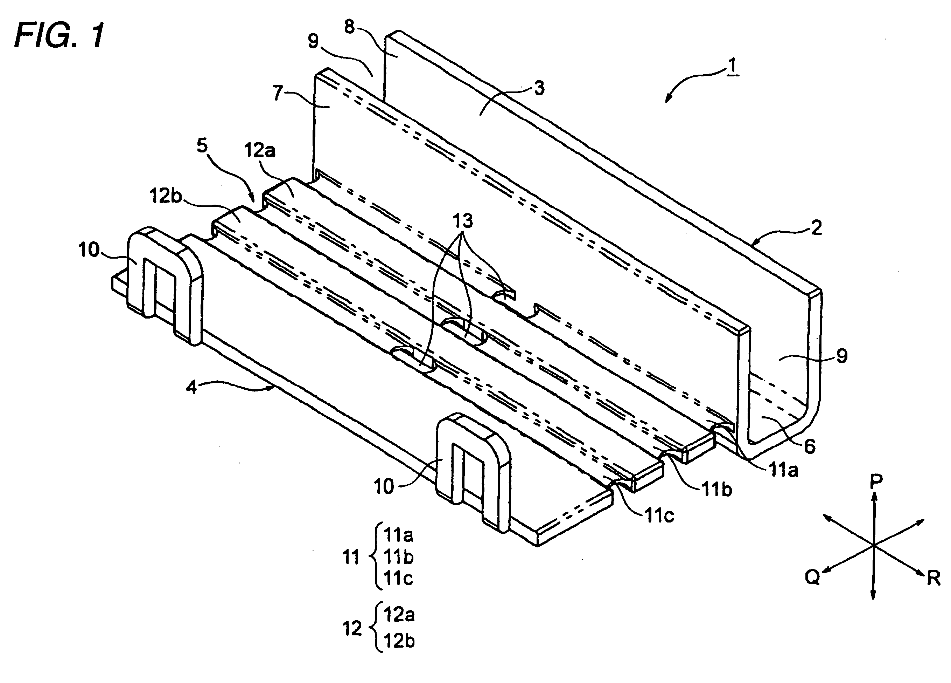

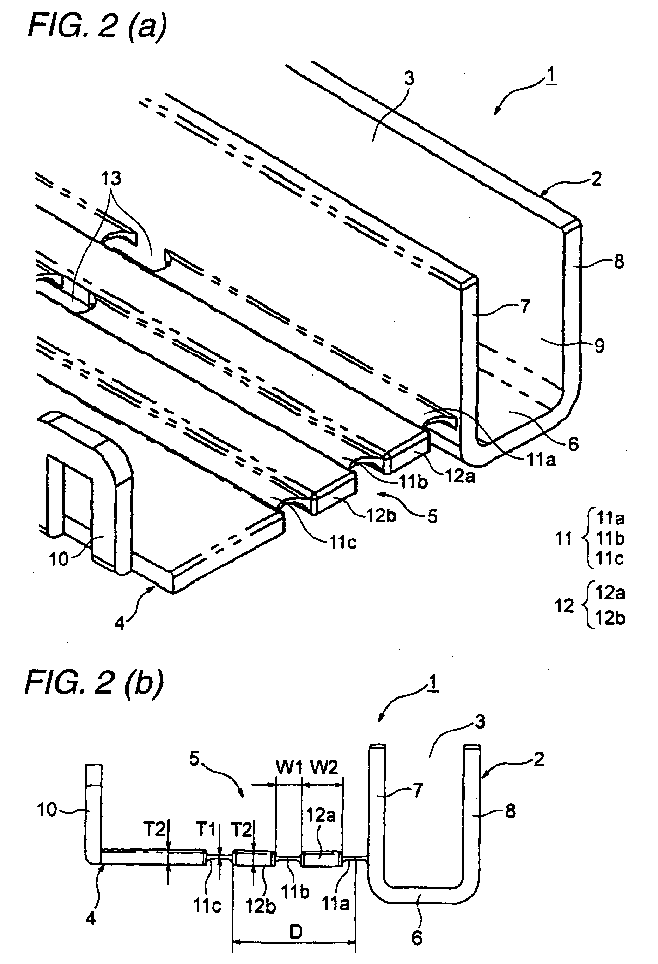

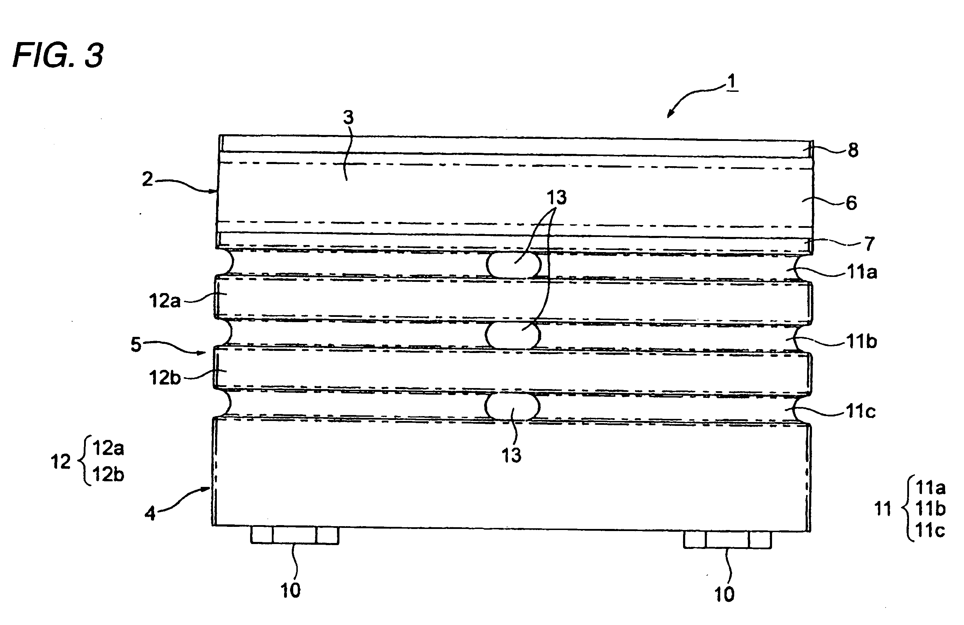

Hereafter, a description will be given with reference to the drawings. Fig. 1 is a perspective view of a protector illustrating a first embodiment of a hinge structure in accordance with the invention. Fig. 2A is an enlarged view of Fig. 1, and Fig. 2B is an end face view of the protector. Fig. 3 is a plan view of the protector.

In Figs. 1 to 3, reference numeral 1 denotes a synthetic resin-made protector. The protector 1 is comprised of a protector body 2 (first resin member) for accommodating an un-illustrated wire harness and a protector cover 4 (second resin member) for covering an opening 3 formed in this protector body 2. The protector body 2 and the protector cover 3 are connected to each other by a hinge structure 5 in accordance with the invention. Hereafter, a description will be given of each construction.

The protector body 2 has a bottom wall 6 extending long along the routing direction of the aforementioned wire harness and a pair of sidewalls 7 and 8 (the side wall 7 corresponds to the wall stated in the claim) respectively rising upward from both sides of this bottom wall 6 and opposing each other. Here, if it is defined that arrow P is a vertical direction, arrow Q is a left-right direction, and arrow R is a front-back direction in Fig. 1, the aforementioned opening 3 is formed on the inner side of respective upper ends (distal ends) of the pair of side walls 7 and 8. Openings in the back-front direction, which are denoted by reference numeral 9, are formed as portions for drawing out the aforementioned wire harness.

One end of the hinge structure 5 is formed continuously with an outer surface of the sidewall 7 on the left side. Although not particularly shown, retaining projections for retaining the protector cover 4 are projectingly formed on an outer surface of the sidewall 8 on the right side.

The protector cover 4 is a strip-like wall which is capable of covering the opening 3 when set in a state of being placed on the upper ends of the pair of sidewalls 7 and 8, another end of the hinge structure 5 being formed continuously with one side portion of the protector cover 4. On the other hand, a plurality of retaining frame portions 10, which latch on the aforementioned un-illustrated retaining projections on the protector body 2, are formed on the other side portion of the protector cover 4.

The hinge structure 5 has a bendable thin-walled plate-like hinge 11 and a rigid portion 12 continuing from this hinge 11 and formed with a large wall thickness. The hinge 11 is constituted by a plurality of hinge rows 11a to 11c. In addition, the rigid portion 12 is also constituted by a plurality of rigid portion rows 12a to 12b.

The number of the hinge rows 11 a to 11 c is set to a number that is larger by one than the number of the rigid portion rows 12a and 12b. The hinge rows 11 a to 11 c are arranged in a state in which the rigid portion rows 12a and 12b are each interposed as in the illustrated manner (i.e., are arranged so as to be disposed alternately). The hinge rows 11 a to 11c and the rigid portion rows 12a and 12b are arranged parallel to each other and parallel to the outer surface of the side wall 7 on the left side.

In Fig. 2B, the hinge rows 11a to 11c are formed with an identical wall thickness T1. Further, the rigid portion rows 12a and 12b are also formed with an identical wall thickness T2. In this embodiment, the wall thickness of the protector cover 4 is also formed with T2. The wall thickness T1 of each of the hinge rows 11a to 11c and the wall thickness T2 of each of the rigid portion rows 12a and 12b are set such that T1 < T2.

On the other hand, as for the width, the hinge rows 11a to 11c are formed with an identical width W1. The rigid portion rows 12a and 12b are also formed with an identical width W2. The width W1 of each of the hinge rows 11a to 11 c and the width W2 of each of the rigid portion rows 12a and 12b are set such that W1 < W2.

By virtue of such a dimensional relationship, the hinge structure 5 is in a state in which it is difficult to twist and difficult to break off. The hinge structure 5 is made such that, by virtue of the rigidity of the rigid portion 12, a force in the twisting direction is difficult to be applied to the hinge 11. It should be noted that a description will be given later of the twisting.

The aforementioned one end of the hinge structure 5, i.e., the portion which is formed continuously with the outer surface of the side wall 7, is set such that this position of the continuous formation is a position on the proximal end side of the side wall 7 which is distant from the upper end (distal end) of the side wall 7 in accordance with a dimension D or the number of the rows of the rigid portion. (As can be appreciated from Fig. 2B, the hinge structure 5 in accordance with this embodiment is formed continuously with the side wall 7 at a position close to the bottom wall 6).

Each of the hinge rows 11a to 11c is divided into two. (It is assumed that the number of division is exemplary. It should be noted that although each of the hinge rows 11a to 11c may not be divided, the risk of losing the function as a hinge is present in the event that breakage has occurred in the rows.) Holes 13 of an arbitrary size are formed in the hinge rows 11 a to 11 c by the division.

As has been described above with reference to Figs. 1 to 3, according to the hinge structure 5 in accordance with the invention, the hinge rows 11a to 11c are adapted to function as the center of rotation at the time of effecting the opening and closing of the protector cover 4. Therefore, if the center of rotation is selected in accordance with the situation of the surroundings of the opening 3, the opening and closing of the protector cover 4 can be effected even if there is no sufficient space. In addition, according to the hinge structure 5 in accordance with the invention, since the hinge rows 11 a to 11 c permit bending in multiple stages, even if there is no sufficient space, the opening and closing of the protector cover 4 can be effected. Additionally, the hinge structure 5 in accordance with the invention is difficult to twist and difficult to break off and is therefore provided with a durable structure.

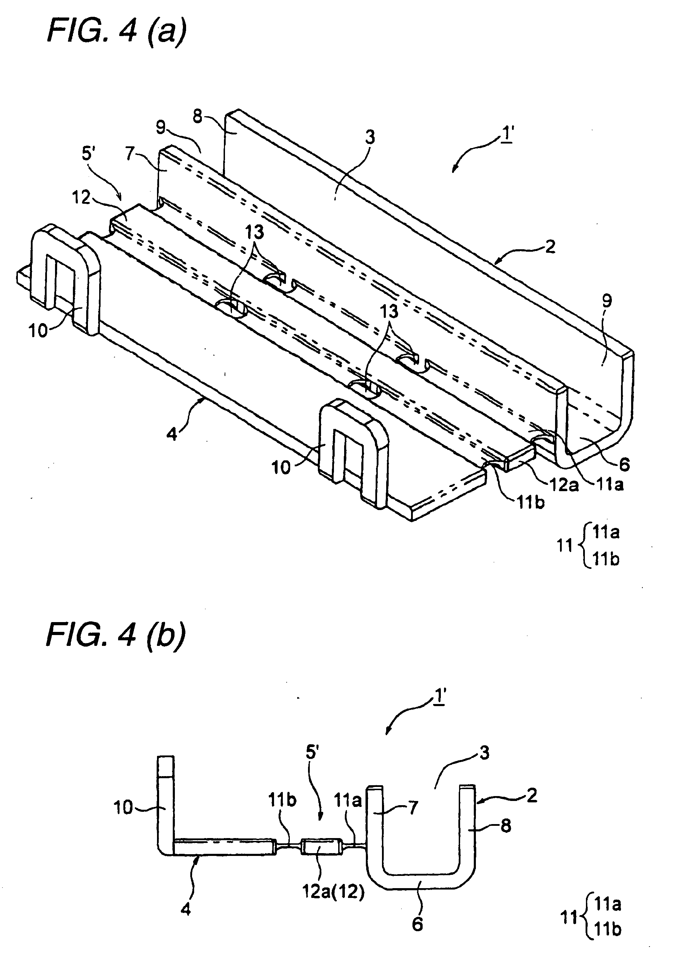

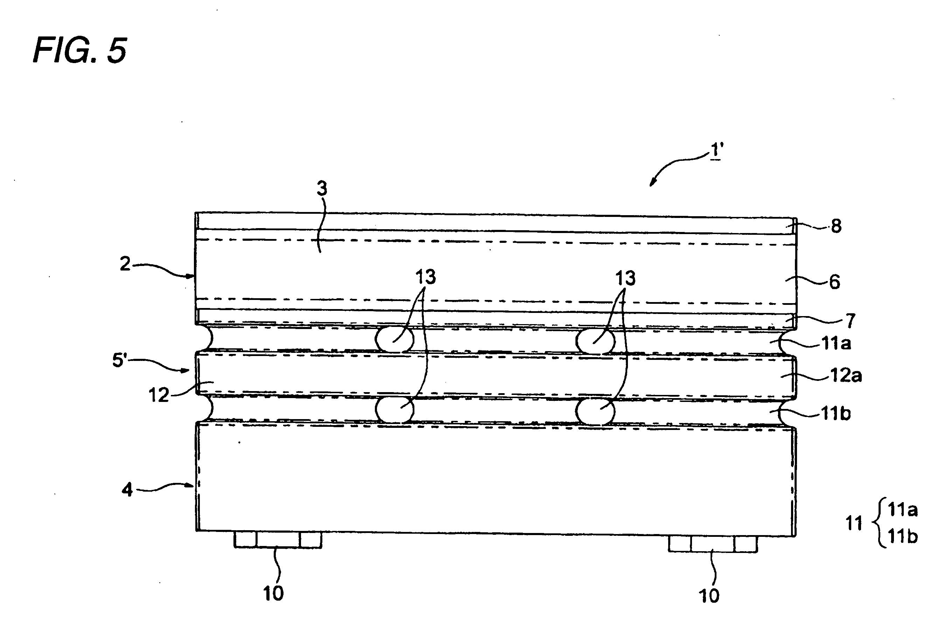

Next, referring to Figs. 4 and 5, a description will be given of another embodiment of the hinge structure in accordance with the invention. Figs. 4A and 4B are diagrams illustrating the other embodiment, in which Fig. 4A is a perspective view of the protector, and Fig. 4B is an end face view of the protector. Fig. 5 is a plan view of the protector shown in Figs. 4A and 4B. It should be noted that those component parts or portions identical to those of the above-described embodiment will be denoted by the same reference numerals and a description thereof will be omitted. (In the cases of similar component parts or portions, a prime (') will be appended thereto.)

In Figs. 4 and 5, a protector 1' is comprised of the protector body 2 (first resin member) for accommodating an un-illustrated wire harness and the protector cover 4 (second resin member) for covering the opening 3 formed in this protector body 2. The protector body 2 and the protector cover 3 are connected to each other by a hinge structure 5' in accordance with the invention.

The hinge structure 5' has the bendable thin-walled plate-like hinge 11 and the rigid portion 12 continuing from this hinge 11 and formed with a large wall thickness. The hinge 11 is constituted by the plurality of hinge rows 11 a and 11b. In addition, the rigid portion 12 is constituted by the rigid portion row 12a.

Each of the hinge rows 11 a and 11 b is divided in three in these rows. (It is assumed that the number of division is exemplary. The number of division may be greater than the same. The number of division suffices if it is set in accordance with the overall length of the protector 1' and the range of formation of the hinge structure 5'.)

Since the hinge structure 5' has basically the same construction and structure as those of the hinge structure 5 shown in Figs. 1 to 3, the hinge structure 5' is adapted to produce the same effect as that of the hinge structure 5.

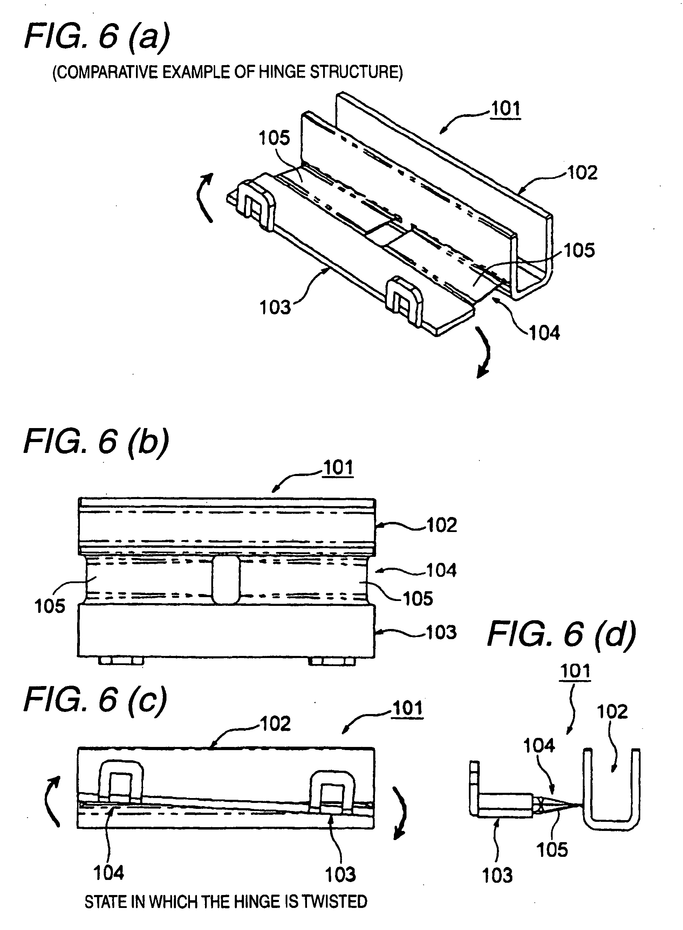

Figs. 6A to 6D are diagrams illustrating a comparative example for the above-described hinge structures 5 and 5', in which Fig. 6A is a perspective view of a protector, Fig. 6B is a plan view of the protector, Fig. 6C is a side view of the protector, and Fig. 6D is an end face view of the protector.

In Figs. 6A to 6D, a protector body 102 and a protector cover 103 constituting a protector 101 are connected to each other by a hinge structure 104 in accordance with the comparative example. The hinge structure 104 is constructed only by a two-split wide hinge 105 that is bendable and formed in the shape of a thin-walled plate.

Since the hinge structure 104 is constructed only by the hinge 105 of the above-described shape, the hinge structure 104 is easily twisted in the direction of the arrows in the drawings. In addition to this, breakage is likely to occur in the hinge structure 104 due to the twisting of the hinge 105. In addition, the structure of the hinge structure 104 is such that the hinge structure 104 is difficult to serve as a center of stable rotation of the protector cover 103 owing to the wide and easily twisted hinge 105. Furthermore, the structure is such that the hinge structure 104 cannot be bent in multiple stages. Accordingly, the hinge structures 5 and 5' (see Figs. 1 to 5) in accordance with the invention have more effective structures than the hinge structure 104 in accordance with the comparative example.

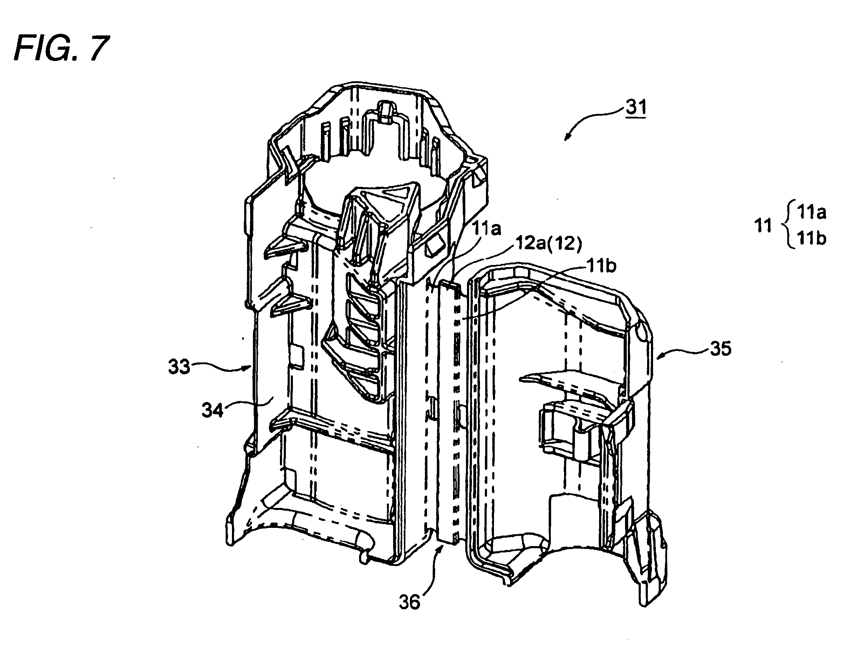

Referring next to Figs. 7 to 10, a description will be given of the hinge structure of a terminal cap in accordance with the invention. Fig. 7 is a perspective view of a terminal cap illustrating an embodiment.

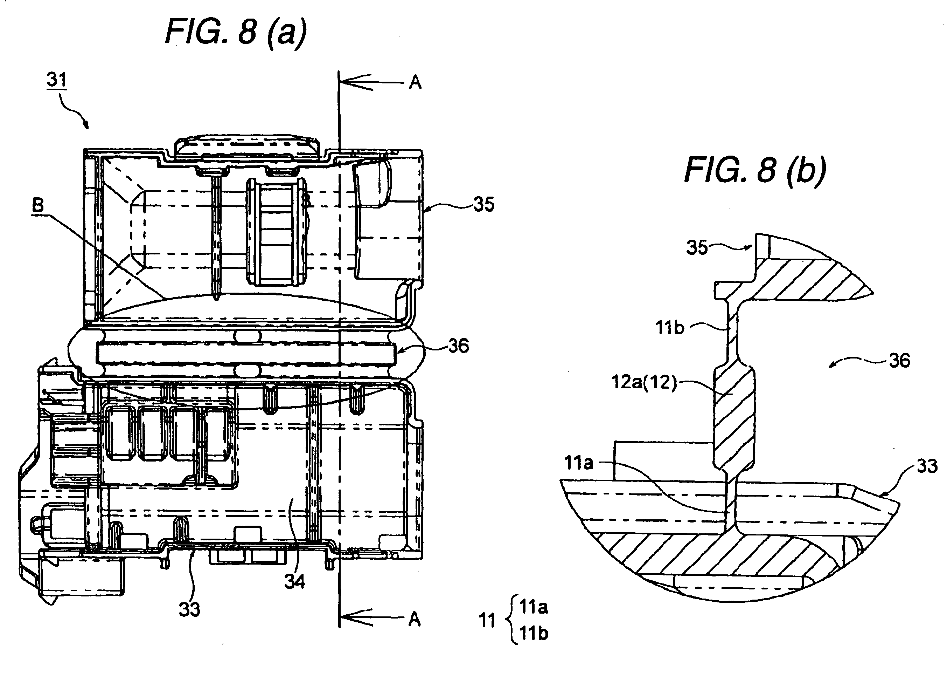

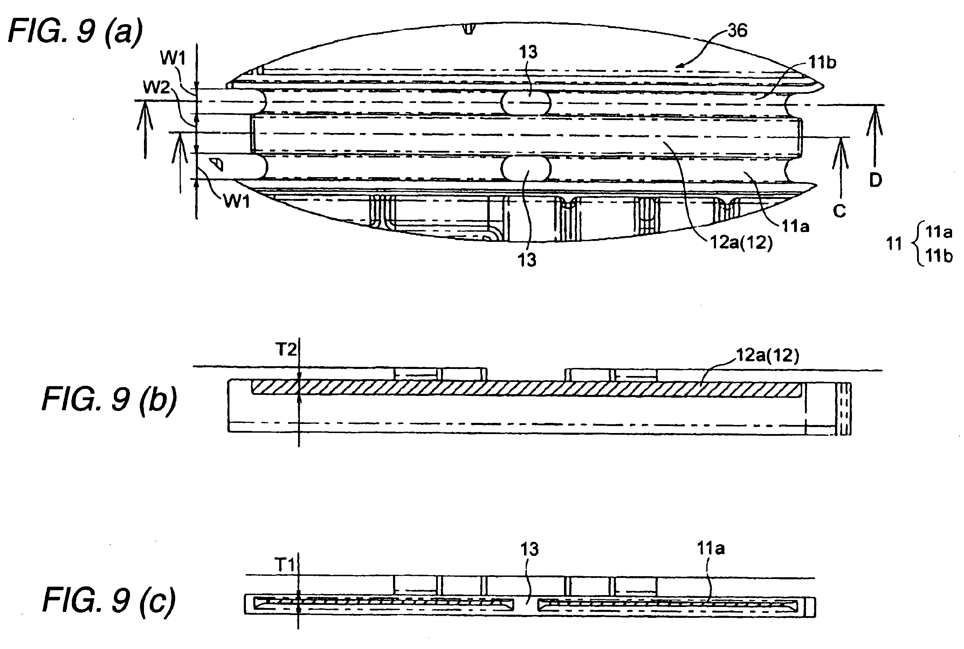

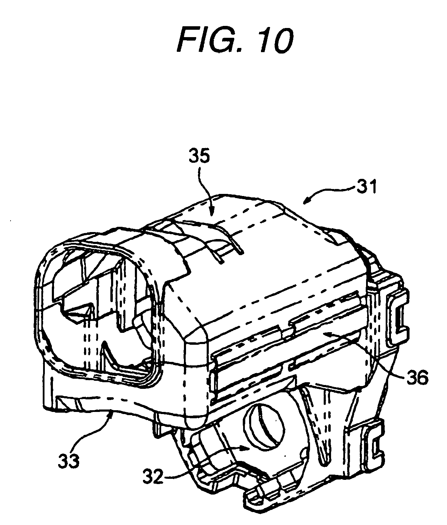

In addition, Fig. 8A is a plan view of the hinge structure of a terminal cap, and Fig. 8B is a cross-sectional view taken along line A-A in Fig. 8A. Fig. 9A is an enlarged view of a portion B in Fig. 8A, Fig. 9B is a cross-sectional view taken along line C - C in Fig. 9A, and Fig. 9C is a cross-sectional view taken along line D - D in Fig. 9A. Fig. 10 is a perspective view illustrating a state of use of the terminal cap.

In Figs. 7 and 10, a terminal cap 31 is formed of an insulating synthetic resin material and is comprised of a cap body 33 for accommodating a terminal 32 and a cover 35 for covering an opening 34 of this cap body 33. The cap body 33 and the cover 35 are connected to each other by a hinge structure 36. It should be noted that the cap body 33 and the cover 35 are basically the same as those disclosed in the patent document 1 (JP-A-2004-253223) in the column for the background art, and a detailed description thereof will be omitted herein.

In Figs. 7 to 10, the hinge structure 36 has the bendable thin-walled plate-like hinge 11 and the rigid portion 12 continuing from this hinge 11 and formed with a large wall thickness. The hinge 11 is constituted by the plurality of hinge rows 11a and 11b. In addition, the rigid portion 12 is constituted by the rigid portion row 12a. The hinge rows 11a and 11b are formed so as to be divided in two in these rows.

The hinge rows 11 a and 11 b are formed with the identical wall thickness T1. Further, the rigid portion row 12a is formed with the wall thickness T2. The wall thickness T1 of each of the hinge rows 11 a and 11 b and the wall thickness T2 of the rigid portion row 12a are set such that T1 < T2. On the other hand, the widths of the hinge rows 11a and 11b are formed with the identical width W1. In contrast, the rigid portion row 12a is formed with the width W2. The width W1 of each of the hinge rows 11 a and 11 b and the width W2 of the rigid portion row 12a are set such that W1 < W2.

Since the hinge structure 36 has basically the same construction and structure as those of the hinge structures 5 and 5' shown in Figs. 1 to 5, the hinge structure 36 is adapted to produce the same effect as that described above. Namely, an effect is produced in that even if there is no sufficient space around the terminal cap 31, the opening 34 of the cap body 33 can be opened or closed by moving the cover 35.

In addition, it goes without saying that, in the invention, various changes may be made without departing from the scope of the invention.

## Claims

1. A hinge structure (5, 5', 36), comprising:
a bendable plate-like hinge (11), whose one end is continued from an outer surface of a wall (7) constituting a first resin member (2) and whose other end is continued from a second resin member (4) covering an opening (3) that is opened on an inner side of distal ends of the wall (7);
**characterized by** further comprising:
at least one row (12a, 12b) of a rigid portion (12), continued from the hinge (11), provided in parallel to the wall (7), and provided as a construction separate from the hinge (11);
wherein the hinge (11) is comprised of rows (11a, 11b) in a number that is larger by one than a number of the row (12a, 12b) of the rigid portion (12); and
wherein the rows (11a, 11b) of the hinge (11) are arranged in parallel to the wall (7) with the rigid portion (11) interposed between each of the rows (11 a, 11 b) of the hinge (11).

2. The hinge structure according to claim 1, wherein the hinge (11) is formed such that a width (W1) of each of the rows (11 a, 11 b) of the hinge (11) is shorter than a width (W2) of each of the row (12a, 12b) of the rigid portion (12).

3. A hinge structure of a terminal cap (31) in which the hinge structure (36) according to claims 1 or 2 is adopted as a hinge structure (36) between a cap body (33) and a cover (35) in an insulating terminal cap (31) which is used for accommodating and protecting an electrically conductive terminal (32).

## Patentansprüche

1. Scharnierstruktur (5, 5', 36), die umfasst:
ein biegbares plattenartiges Scharnier (11), dessen eines Ende sich an eine Außenfläche einer Wand (7) anschließt, die ein erstes Kunststoffelement (2) bildet, und dessen anderes Ende sich an ein zweites Kunststoffelement (4) anschließt, dass eine Öffnung (3) abdeckt, die sich an einer Innenseite vorderer Enden der Wand (7) öffnet;
**dadurch gekennzeichnet, dass** es des Weiteren umfasst:
wenigstens eine Reihe (12a, 12b) eines starren Abschnitts (12), der sich an das Scharnier (11) anschließt, parallel zu der Wand (7) angeordnet ist und als eine von dem Scharnier (11) separate Konstruktion vorhanden ist;
wobei das Scharnier (11) aus Reihen (11a, 11b) in einer Anzahl besteht, die um 1 größer ist als eine Anzahl der Reihen (12b) des starren Abschnitts (12); und
die Reihen (11a, 11b) des Scharniers (11) parallel zu der Wand (7) angeordnet sind und der starre Abschnitt (11) zwischen jeder der Reihen (11 a, 11 b) des Scharniers (11) angeordnet ist.

2. Scharnierstruktur nach Anspruch 1, wobei das Scharnier (11) so ausgebildet ist, dass eine Breite (W1) jeder der Reihen (11 a, 11 b) des Scharniers (11) kürzer ist als eine Breite (W2) jeder Reihe (12a, 12b) des starren Abschnitts (12).

3. Scharnierstruktur einer Anschluss-Kappe (31), bei der die Scharnierstruktur (36) nach Anspruch 1 oder 2 als eine Scharnierstruktur (36) zwischen einem Kappenkörper (33) und einer Abdeckung (35) in einer isolierenden Anschlusskappe (31) eingesetzt wird, die zum Aufnehmen und Schützen eines elektrisch leitenden Anschlusses (32) dient.

## Revendications

1. Structure charnière (5, 5', 36), comprenant :
une charnière type plaque flexible (11), dont une extrémité se poursuit depuis une surface externe d'une paroi (7) constituant un premier élément de résine (2) et dont l'autre extrémité se poursuit depuis un second élément de résine (4) recouvrant une ouverture (3) qui est ouverte sur un côté interne des extrémités distales de la paroi (7) ;
**caractérisée en ce qu'**elle comprend en outre :
au moins une rangée (12a, 12b) d'une partie rigide (12), se poursuivant depuis la charnière (11), proposée en parallèle à la paroi (7), et proposée sous la forme d'une construction séparée de la charnière (11) ;
où la charnière (11) est composée de rangées (11a, 11b) en un nombre qui est plus grand d'une unité qu'un nombre de rangée (12a, 12b) de la partie rigide (12) ; et
où les rangées (11a, 11b) de la charnière (11) sont disposées en parallèle à la paroi (7) avec la partie rigide (11) interposée entre chacune des rangées (11a, 11b) de la charnière (11).

2. Structure charnière selon la revendication 1, où la charnière (11) est formée de sorte qu'une largeur (W1) de chacune des rangées (11a, 11b) de la charnière (11) est plus courte qu'une largeur (W2) de chacune de la rangée (12a, 12b) de la partie rigide (12).

3. Structure charnière d'un capuchon terminal (31) dans lequel la structure charnière (36) selon les revendications 1 ou 2 est adoptée comme structure charnière (36) entre un corps de capuchon (33) et un couvercle (35) d'un capuchon terminal isolant (31) qui est utilisé pour loger et protéger une terminaison électriquement conductrice (32).
